# EUROPÄISCHE PATENTANMELDUNG

(11) **EP 3 473 505 A1**
(43) Veröffentlichungstag der Anmeldung: **24.04.2019**
(21) Anmeldenummer: 18201947.1
(22) Anmeldetag: 23.10.2018
(51) Int. Cl.: B60S 3/04

(54) **VORRICHTUNG UND VERFAHREN ZUM AUFBRINGEN EINER BEHANDLUNGSFLÜSSIGKEIT AUF EIN RAD EINES FAHRZEUGS**

(30) Priorität: 23.10.2017 DE 102017124752
(71) Anmelder: WashTec Holding GmbH, 86153 Augsburg (DE)
(72) Erfinder: STEININGER, Franz, 86424 Dinkelscherben (DE)
(74) Vertreter: Winter, Brandl, Fürniss, Hübner, Röss, Kaiser, Polte - Partnerschaft mbB

(57) **Zusammenfassung**

Die Erfindung betrifft eine Vorrichtung (4, 4') zum Aufbringen einer Behandlungsflüssigkeit auf ein Rad (10) eines Fahrzeugs (8) in einer Fahrzeugbehandlungsanlage (2) mit: einer Sprühdüse (12), mittels welcher die Behandlungsflüssigkeit auf das Rad (10) aufgesprüht werden kann; und einer Radbehandlungsbürste (14), welche einer Behandlung des Rads (10) dient und welche mittels einer ersten Zustellvorrichtung (16, 16') zwischen einer radfernen Bürstengrundstellung und einer Behandlungsstellung am Rad bewegbar ist; wobei die Vorrichtung (4, 4') eingerichtet ist, beim Verbringen der Radbehandlungsbürste (14) von der radfernen Bürstengrundstellung in die Behandlungsstellung am Rad die Sprühdüse (12) von einer radfernen Düsengrundstellung in eine bevorzugte Sprühstellung zu bewegen, und beim Verbringen der Radbehandlungsbürste (14) weg von der Behandlungsstellung am Rad, insbesondere hin zu der radfernen Bürstengrundstellung, die Sprühdüse (12) in der bevorzugten Sprühstellung zu belassen. Außerdem betrifft die Erfindung eine Fahrzeugbehandlungsanlage (2) mit zumindest einer gegenüber einem zu behandelnden Fahrzeug (8) in eine Behandlungsrichtung (B) hin und her verfahrbaren Portalsäule (6), an welcher eine solche Vorrichtung (4, 4') vorgesehen ist. Weiterhin betrifft die Erfindung ein Verfahren zum Aufbringen einer Behandlungsflüssigkeit auf ein Rad (10) eines Fahrzeugs (8) in einer Fahrzeugbehandlungsanlage (2), insbesondere mit Hilfe einer solchen Vorrichtung (4, 4').

## Beschreibung

Die Erfindung betrifft eine Vorrichtung zum Aufbringen einer Behandlungsflüssigkeit auf ein Rad eines Fahrzeugs in einer Fahrzeugbehandlungsanlage mit einer Sprühdüse, mittels welcher die Behandlungsflüssigkeit auf das Rad aufgesprüht werden kann, und einer Radbehandlungsbürste, welche einer Behandlung des Rads dient und welche mittels einer ersten Zustellvorrichtung zwischen einer radfernen Bürstengrundstellung und einer Behandlungsstellung am Rad bewegbar ist.

Weiterhin betrifft die Erfindung eine Fahrzeugbehandlungsanlage mit zumindest einer gegenüber einem zu behandelnden Fahrzeug in eine Behandlungsrichtung hin und her verfahrbaren Portalsäule, an welcher eine solche Vorrichtung vorgesehen ist.

Zudem betrifft die Erfindung ein Verfahren zum Aufbringen einer Behandlungsflüssigkeit auf ein Rad eines Fahrzeugs in einer Fahrzeugbehandlungsanlage.

### Stand der Technik

Aus der EP 2 571 734 B1 sind eine Vorrichtung und ein Verfahren zum Aufbringen einer Behandlungsflüssigkeit auf ein Rad eines Fahrzeugs in einer Fahrzeugbehandlungsanlage bekannt. In dieser Druckschrift ist eine Sprühdüse/ Auftragsdüse, mittels welcher chemische Behandlungsflüssigkeit auf ein Rad aufgesprüht werden kann, fest mit einer Zustellvorrichtung einer Radbehandlungsbürste gekoppelt/verbunden. Die Zustellvorrichtung, ausgebildet als (linear) ausfahrbare(r) Führung/Arm, ist eingerichtet, die Radbehandlungsbürste zunächst zu einer Behandlungsstellung am Rad zu bewegen. Sobald, beispielsweise mittels eines Widerstandsaufnehmers, festgestellt wird, dass die Radbehandlungsbürste das Rad erreicht hat, fährt die Zustellvorrichtung um einen definierten Weg zurück, damit die Radbehandlungsbürste beim Aufsprühen der Behandlungsflüssigkeit nicht an dem Rad anliegt. Der definierte Weg wird derart festgelegt/bestimmt, dass die Sprühdüse nach dem Zurückfahren eine bevorzugte, optimierte Sprühstellung einnimmt, das heißt, dass sie einen Sprühabstand von dem Rad einnimmt, welcher an ihre Sprüheigenschaften angepasst ist und welcher einen geeigneten Behandlungsflüssigkeitsauftrag auf das Rad ermöglicht.

Der Stand der Technik der EP 2 571 734 B1 hat zum einen den Nachteil, dass die Zustellvorrichtung mit einer Wegmesseinrichtung ausgestattet sein muss, über welche der definierte Weg, den die Zustellvorrichtung zurückgefahren werden muss, gemessen werden kann. Diese Wegmesseinrichtung ist in einer Fahrzeugbehandlungsanlage einer hohen Verschmutzung ausgesetzt, was häufig zu einem Ausfall derselben geführt hat. Im Stand der Technik ging man vor diesem Hintergrund dazu über, die Wegmesseinrichtung sehr robust auszuführen, was jedoch mit einem höheren Fertigungsaufwand und höheren Kosten verbunden ist.

Zum anderen hat der Stand der Technik der EP 2 571 734 B1 den Nachteil, dass eine genaue Positionierung der Zustellvorrichtung mit der/des aus Kraftbegrenzungs- und Nachgiebigkeitsgründen verwendeten pneumatischen Ansteuerung/Antriebs relativ aufwändig zu realisieren ist. Insbesondere mussten im Stand der Technik separate, dezentrale Steuerkästen in unmittelbarer Nähe zu den Antrieben eingebaut werden.

### Kurzbeschreibung der Erfindung

Vor diesem Hintergrund ist es Aufgabe der vorliegenden Erfindung, die genannten Nachteile aus dem Stand der Technik zu vermeiden bzw. wenigstens zu mildern. Insbesondere soll eine Positionierung der Sprühdüse in einer bevorzugten Sprühstellung (relativ zu einem Rad eines Fahrzeugs) vereinfacht bzw. weniger aufwändig realisiert werden.

Diese Aufgabe wird durch eine Vorrichtung zum Aufbringen einer Behandlungsflüssigkeit auf ein Rad eines Fahrzeugs in einer Fahrzeugbehandlungsanlage nach Anspruch 1, einer Fahrzeugbehandlungsanlage nach Anspruch 9 und ein Verfahren zum Aufbringen einer Behandlungsflüssigkeit auf ein Rad eines Fahrzeugs in einer Fahrzeugbehandlungsanlage nach Anspruch 10 gelöst. Vorteilhafte Ausführungsformen und Weiterbildungen sind in den Unteransprüchen beansprucht und/oder nachfolgend erläutert.

Die Erfindung betrifft zunächst eine Vorrichtung zum Aufbringen einer Behandlungsflüssigkeit auf ein Rad eines Fahrzeugs in einer Fahrzeugbehandlungsanlage mit: einer Sprühdüse, mittels welcher die Behandlungsflüssigkeit auf das Rad aufgesprüht werden kann; und einer Radbehandlungsbürste, welche einer Behandlung des Rads dient und welche mittels einer ersten Zustellvorrichtung zwischen einer radfernen Bürstengrundstellung und einer Behandlungsstellung am Rad bewegbar ist. Dabei ist die Vorrichtung eingerichtet, beim Verbringen der Radbehandlungsbürste von der radfernen Bürstengrundstellung in die Behandlungsstellung am Rad die Sprühdüse, insbesondere mittels der ersten Zustellvorrichtung, von einer radfernen Düsengrundstellung in eine bevorzugte Sprühstellung zu bewegen, und beim Verbringen der Radbehandlungsbürste weg von der Behandlungsstellung am Rad, insbesondere hin zu der radfernen Bürstengrundstellung, die Sprühdüse in der bevorzugten Sprühstellung zu belassen.

Unter einer Fahrzeugbehandlungsanlage ist erfindungsgemäß eine beliebige Fahrzeugwaschanlage, wie etwa eine Portalwaschanlage oder eine (Auto-) Waschstraße zu verstehen. Wird in der vorliegenden Erfindung von einer Behandlung oder einem Behandeln gesprochen, sind alle denkbaren Vorgänge, Schritte oder Programme, welche in einer Fahrzeugbehandlungsanlage ablaufen können, gemeint. Beispielsweise sind unter einer Behandlung oder einem Behandeln somit ein Reinigen, ein Waschen, ein Schaumauftrag, ein Bürsten, ein Wachsen, ein Polieren, ein Trocknen, ein Konservieren, ein Reinigungsmittelauftrag, ein Poliermittelauftrag, etc. zu verstehen.

Es versteht sich dabei von selbst, dass erfindungsgemäß unter einer Behandlung des Rads nicht eine Behandlung des gesamten Rads (also auch der Radinnenseite) zu verstehen ist, sondern lediglich eine Behandlung der von der Fahrzeugaußenseite zugänglichen Radteile, insbesondere der Radfelge und gegebenenfalls auch des äußeren Radmantels, gemeint ist.

Die Behandlungsflüssigkeit kann beispielsweise eine (chemische) Reinigungsflüssigkeit sein, welche mittels der Sprühdüse/ Auftragsdüse auf das Rad des Fahrzeugs aufgebracht wird und dazu dient, anhaftende Verunreinigungen anzulösen. Die Radbehandlungsbürste kann beispielsweise eine Radwaschbürste sein, mittels welcher das Rad gereinigt wird bzw. Verunreinigungen entfernt werden.

Die erste Zustellvorrichtung kann als (linear) aus- und einfahrbare Führung oder als aus- und einfahrbarer (ggf. teleskopischer) Arm ausgebildet sein. Die vorzugsweise rotierend antreibbare Radbehandlungsbürste ist bevorzugt fest in der ersten Zustellvorrichtung aufgenommen/ an dieser montiert bzw. in dieser geführt. Die erste Zustellvorrichtung dient grundsätzlich dazu, die Radbehandlungsbürste bei Fahrzeugen mit unterschiedlicher Spurweite möglichst an das Rad heranbringen/ in Kontakt mit dem Rad bringen zu können.

Unter einer radfernen Bürstengrundstellung ist erfindungsgemäß eine Ruhestellung/ eine vollständig eingefahrene Stellung der Radbehandlungsbürste gemeint, in welcher diese von dem Rad eines Fahrzeugs seitlich beabstandet ist und in welcher diese nicht mit einer Bürstenfläche an dem Rad anliegt. Unter einer Behandlungsstellung am Rad ist hingegen eine Positionierung der Radbehandlungsbürste, insbesondere einer Bürstenfläche derselben, anliegend/ in Kontakt mit dem Rad des Fahrzeugs gemeint. Dass die Radbehandlungsbürste die Behandlungsstellung am Rad erreicht hat, kann beispielsweise mittels eines Kraftbegrenzers/ einer Kraftbegrenzung oder einer Motorstromvermessung in an sich bekannter Weise festgestellt werden. Auch kann ein Widerstandsaufnehmer/ -sensor vorgesehen sein.

Unter einer radfernen Düsengrundstellung ist dementsprechend eine Ruhestellung der Sprühdüse gemeint, in welcher sich diese in einem für einen Sprühauftrag ungeeigneten, zu großen Abstand von dem Rad des Fahrzeugs befindet. Die Sprühdüse ist bevorzugt in der radfernen Düsengrundstellung in einem vordefinierten Abstand hinter einer Bürstenfläche der Radbehandlungsbürste angeordnet. Die Sprühdüse stellt bevorzugt einen aufgeweiteten Sprühstrahl, beispielsweise einen Flachstrahl oder einen Fächerstrahl bereit. Ist die Sprühdüse in einem auf ihre Sprüheigenschaften abgestimmten, optimalen Sprühabstand von dem Rad eines Fahrzeugs angeordnet, wird erfindungsgemäß von einer bevorzugten Sprühstellung gesprochen. In der bevorzugten Sprühstellung ist die Sprühdüse gerade so weit von dem Rad des Fahrzeugs beabstandet, dass der von ihr abgegebene Sprühstrahl, wenn er auf das Rad des Fahrzeugs trifft, in einer Richtung vorzugsweise (zumindest näherungsweise) senkrecht zu dem Boden der Fahrzeugbehandlungsanlage, in welcher die erfindungsgemäße Vorrichtung angeordnet/vorgesehen ist, eine Erstreckung aufweist, welche etwa dem Durchmesser des Rads/ der Felge entspricht.

Kern der vorliegenden Erfindung ist es, dass ein Verbringen der Radbehandlungsbürste in die Behandlungsstellung am Rad bewirkt, dass die Sprühdüse dadurch in die bevorzugte Sprühstellung gebracht wird, und dass bei einem (darauf folgenden) Verbringen der Radbehandlungsbürste weg von der Behandlungsstellung am Rad, die Sprühdüse in der bevorzugten Sprühstellung verbleibt. Die Sprühdüse ist somit, wenn die Radbehandlungsbürste die Behandlungsstellung am Rad erreicht, in einem vordefinierten Abstand, dem optimalen Sprühabstand, von dem Rad entfernt angeordnet. Die Radbehandlungsbürste wird wieder von der Behandlungsstellung am Rad wegbewegt, damit sie beim Aufsprühen der Behandlungsflüssigkeit nicht an dem Rad anliegt. Verbleibt die Sprühdüse bei diesem Vorgang in der bevorzugten Sprühstellung, sind keine Wegmesseinrichtung und keine aufwändige pneumatische Positionierung notwendig. Eine Positionierung der Sprühdüse wird somit erfindungsgemäß wesentlich vereinfacht.

Bevorzugt ist die Sprühdüse beim Verbringen der Radbehandlungsbürste von der radfernen Bürstengrundstellung in die Behandlungsstellung am Rad mit der ersten Zustellvorrichtung zumindest abschnittsweise gekoppelt und ist die Sprühdüse beim Verbringen der Radbehandlungsbürste weg von der Behandlungsstellung am Rad, insbesondere hin zu der radfernen Bürstengrundstellung, von der ersten Zustellvorrichtung zumindest abschnittsweise, insbesondere über eine vorbestimmte Wegstrecke, entkoppelt.

In vorteilhafter Weise ist eine zweite Zustellvorrichtung vorgesehen, an welcher die Sprühdüse angebracht oder montiert ist, und mittels welcher die Sprühdüse von der bevorzugten Sprühstellung in die radferne Düsengrundstellung verbringbar ist. Bevorzugt kann die Sprühdüse, wenn diese in der bevorzugten Sprühstellung verbleibt, wenn sich die Radbehandlungsbürste weg von der Behandlungsstellung am Rad hin zu der radfernen Bürstengrundstellung bewegt, somit über eine eigene, zweite Zustellvorrichtung, welche ebenso als (linear) aus- und einfahrbare Führung oder als aus- und einfahrbarer (ggf. teleskopischer) Arm ausgebildet sein kann, nach einer erfolgten Behandlung/Sprühauftrag von der bevorzugten Sprühstellung in die radferne Düsengrundstellung bewegt werden.

Bevorzugt ist die Vorrichtung eingerichtet zum: Ausfahren der Radbehandlungsbürste von der radfernen Bürstengrundstellung in die Behandlungsstellung am Rad mittels der ersten Zustellvorrichtung und dadurch bewirktes Verbringen der Sprühdüse von der radfernen Düsengrundstellung in die bevorzugte Sprühstellung; Einfahren der Radbehandlungsbürste mittels der ersten Zustellvorrichtung von der Behandlungsstellung am Rad in die radferne Bürstengrundstellung und gleichzeitiges Verbleiben der Sprühdüse in der bevorzugten Sprühstellung; Aufsprühen von Behandlungsflüssigkeit mit der Sprühdüse auf das Rad und Bewegen der Sprühdüse in einer Behandlungsrichtung entlang des Rads; und Einfahren der Sprühdüse mittels der zweiten Zustellvorrichtung von der bevorzugten Sprühstellung in die radferne Düsengrundstellung.

Es ist vorteilhaft, wenn die erste Zustellvorrichtung einen ersten, vorzugsweise pneumatischen, Antrieb zum Ausfahren der Radbehandlungsbürste von der radfernen Bürstengrundstellung hin zu der Behandlungsstellung am Rad und einen zweiten, vorzugsweise pneumatischen, Antrieb zum Einfahren der Radbehandlungsbürste von der Behandlungsstellung am Rad hin zu der radfernen Bürstengrundstellung aufweist und die zweite Zustellvorrichtung nur einen einzigen, vorzugsweise pneumatischen, Antrieb zum Einfahren der Sprühdüse von der bevorzugten Sprühstellung in die radferne Düsengrundstellung aufweist.

In vorteilhafter Weise ist die Sprühdüse somit auf/an einer eigenen Zustellvorrichtung/ - einheit montiert, welche lediglich einen Antrieb zum Einfahren der Sprühdüse, jedoch keinen Antrieb zum Ausfahren der Sprühdüse in Richtung hin zu einem Fahrzeug aufweist.

Bevorzugt reduziert sich eine Ansteuerung für die beiden Antriebe der Zustellvorrichtung der Radbehandlungsbürste (erste Zustellvorrichtung) auf ein einfaches vollständiges Ausfahren und vollständiges Einfahren. Für die Sprühdüse ist bevorzugt nur ein einziger Antrieb zum vollständigen Einfahren derselben nötig. Die vorliegende Erfindung stellt somit auch eine vereinfachte pneumatische Ansteuerung (mit wenigen Ventilen) bereit.

Alternativ kann die Sprühdüse auch mittels der ersten Zustellvorrichtung in die radferne Düsengrundstellung verbringbar sein. Beispielsweise ist es denkbar, dass die Sprühdüse beim Verbringen der Radbehandlungsbürste weg von der Behandlungsstellung am Rad lediglich über eine vorbestimmte Wegstrecke (abschnittsweise) von der ersten Zustellvorrichtung entkoppelt ist und die Radbehandlungsbürste vorzugsweise zunächst hinter die Sprühdüse/ auf die Höhe der Sprühdüse zurückfährt. In dieser Position/Stellung der Radbehandlungsbürste kann dann ein Behandlungsflüssigkeitsauftrag erfolgen. Nach der vorbestimmten Wegstrecke wird in dieser Ausführungsform bevorzugt die Sprühdüse wieder mit der ersten Zustellvorrichtung gekoppelt, so dass auch die Sprühdüse weg von der bevorzugten Sprühstellung und hin zu der Düsengrundstellung verfahren kann. Es sei angemerkt, dass in dieser Ausführungsform die Sprühdüse in der Düsengrundstellung dann vor der Radbehandlungsbürste, das heißt näher an einem zu behandelnden Rad eines Fahrzeugs angeordnet sein kann.

Ein vorteilhaftes Ausführungsbeispiel ist dadurch gekennzeichnet, dass, wenn die erste Zustellvorrichtung die Radbehandlungsbürste von der radfernen Bürstengrundstellung in die Behandlungsstellung am Rad verbringt, die Sprühdüse über einen Mitnehmer mit der ersten Zustellvorrichtung derart gekoppelt ist, dass die erste Zustellvorrichtung die Sprühdüse mitnimmt und/oder mitschleppt, und dass, wenn die erste Zustellvorrichtung die Radbehandlungsbürste von der Behandlungsstellung am Rad in die radferne Bürstengrundstellung verbringt, die Sprühdüse und der Mitnehmer von der ersten Zustellvorrichtung derart entkoppelt sind, dass die erste Zustellvorrichtung relativ zu der Sprühdüse und dem Mitnehmer bewegbar ist und die Sprühdüse in der bevorzugten Sprühstellung verbleibt.

Das Ausfahren der Sprühdüse wird bevorzugt über einen Mitnehmer realisiert, welcher (beim Ausfahren) mit der Zustellvorrichtung/ -einheit der Radbehandlungsbürste gekoppelt ist. Beim Ausfahren ist die Sprühdüse über den Mitnehmer dabei vorzugsweise derart mit der Zustellvorrichtung der Radbehandlungsbürste gekoppelt, dass die Sprühdüse von der Zustellvorrichtung der Radbehandlungsbürste in einem vorbestimmten Abstand zu der Radbehandlungsbürste mitgeschleppt wird. Dadurch wird insbesondere erreicht, dass die Radbehandlungsbürste beim Erreichen der Behandlungsstellung am Rad einen optimalen Sprühabstand zu dem Rad aufweist.

Sobald die Radbehandlungsbürste das Rad erreicht hat, wird der Mitnehmer bevorzugt entkoppelt, so dass die Radbehandlungsbürste zurückfahren kann und die Sprühdüse gleichzeitig in dem vordefinierten Abstand vom Rad stehen bleibt. Die Radbehandlungsbürste fährt in ihre Bürstengrundstellung zurück. Ein Behandlungsflüssigkeitsauftrag erfolgt in einem optimalen Abstand von dem Rad des Fahrzeugs. Nach einer Beendigung des Behandlungsflüssigkeitsauftrags wird die Zustellvorrichtung der Sprühdüse (zweite Zustellvorrichtung) über ihren eigenen Antrieb, welcher nur in eine Richtung hin zur Düsengrundstellung wirkt, in ihre Düsengrundstellung zurückgezogen.

Bevorzugt wird über den Abstand/Wegversatz von Mitnehmer zu Radbehandlungsbürste eine optimale Düsenstellung/ -position eingestellt/erreicht, so dass eine Wegmesseinrichtung entfallen kann.

Bevorzugt sind die Sprühdüse und die Radbehandlungsbürste derart zueinander angeordnet, insbesondere zueinander beabstandet oder versetzt, dass, wenn die Radbehandlungsbürste die Behandlungsstellung am Rad erreicht, die Sprühdüse sich in der bevorzugten Sprühstellung befindet, wobei die Sprühdüse dann einen optimierten, an ihre Sprüheigenschaften angepassten, Sprühabstand von dem Rad einnimmt.

In einem weiteren Ausführungsbeispiel der vorliegenden Erfindung kann die Sprühdüse mit der Radbehandlungsbürste gekoppelt sein, wenn die Radbehandlungsbürste rotierend angetrieben wird, und kann die Sprühdüse von der Radbehandlungsbürste entkoppelt sein, wenn die Radbehandlungsbürste nicht rotierend angetrieben wird (nicht rotiert) und insbesondere von der Behandlungsstellung am Rad wegbewegt wird (insbesondere hin zu der radfernen Bürstengrundstellung). In anderen Worten können eine Kopplung in einer Drehrichtung und eine Entkopplung in einer Zustellrichtung vorliegen. Weiterhin ist es erfindungsgemäß auch denkbar, dass eine Kopplung in einer Drehrichtung der Radbehandlungsbürste und eine Entkopplung in einer Gegendrehrichtung der Radbehandlungsbürste vorliegen.

Die Erfindung betrifft weiterhin eine Fahrzeugbehandlungsanlage mit zumindest einer gegenüber einem zu behandelnden Fahrzeug in eine Behandlungsrichtung hin und her verfahrbaren Portalsäule, an welcher eine Vorrichtung wie voranstehend beschrieben vorgesehen ist.

Außerdem betrifft die Erfindung ein Verfahren zum Aufbringen einer Behandlungsflüssigkeit auf ein Rad eines Fahrzeugs in einer Fahrzeugbehandlungsanlage, insbesondere mit Hilfe einer Vorrichtung wie voranstehend beschreiben, mit den Schritten: Ausfahren einer Radbehandlungsbürste von einer radfernen Bürstengrundstellung hin zu einer Behandlungsstellung am Rad mittels einer ersten Zustellvorrichtung und dadurch bewirktes Verbringen einer Sprühdüse von einer radfernen Düsengrundstellung in eine bevorzugte Sprühstellung; und Einfahren der Radbehandlungsbürste mittels der ersten Zustellvorrichtung weg von der Behandlungsstellung am Rad, insbesondere hin zu der radfernen Bürstengrundstellung, und gleichzeitiges Verbleiben der Sprühdüse in der bevorzugten Sprühstellung.

Vorzugsweise weist das Verfahren ferner die Schritte auf: Aufsprühen von Behandlungsflüssigkeit mit der Sprühdüse auf das Rad und Bewegen der Sprühdüse in einer Behandlungsrichtung entlang des Rads; und Einfahren der Sprühdüse mittels einer zweiten Zustellvorrichtung, an welcher die Sprühdüse angebracht ist, von der bevorzugten Sprühstellung in die radferne Düsengrundstellung.

Weiter bevorzugt sind zusätzlich die Schritte vorgesehen: Mitnehmen und/oder Mitschleppen der Sprühdüse in die bevorzugte Sprühstellung über einen Mitnehmer, welcher mit der ersten Zustellvorrichtung gekoppelt ist, wenn die erste Zustellvorrichtung von der radfernen Bürstengrundstellung in die Behandlungsstellung am Rad verbracht wird; und Relatives Bewegen der Radbehandlungsbürste zu der Sprühdüse und dem Mitnehmer, wenn die erste Zustellvorrichtung die Radbehandlungsbürste weg von der Behandlungsstellung am Rad, insbesondere hin zu der radfernen Bürstengrundstellung verbringt.

Durch die voranstehend beschriebenen bevorzugten Ausführungsformen der vorliegenden Erfindung wird eine optimierte Positionierung einer zustellbaren Sprühdüse in einer Radbehandlungsvorrichtung bereitgestellt.

### Kurzbeschreibung der Figuren

Die Erfindung wird nachfolgend mit Hilfe von Figuren weiter erläutert. Es zeigen:
- Fig. 1: eine schematische Draufsicht einer ersten Ausführungsform einer erfindungsgemäßen Vorrichtung in einer ersten Stellung;
- Fig. 2: eine schematische Draufsicht der ersten Ausführungsform der erfindungsgemäßen Vorrichtung in einer zweiten Stellung;
- Fig. 3: eine schematische Draufsicht der ersten Ausführungsform der erfindungsgemäßen Vorrichtung in einer dritten Stellung;
- Fig. 4: eine schematische Draufsicht einer zweiten Ausführungsform einer erfindungsgemäßen Vorrichtung in einer ersten Stellung;
- Fig. 5: eine schematische Draufsicht der zweiten Ausführungsform der erfindungsgemäßen Vorrichtung in einer zweiten Stellung;
- Fig. 6: eine schematische Draufsicht der zweiten Ausführungsform der erfindungsgemäßen Vorrichtung in einer dritten Stellung; und
- Fig. 7: eine schematische Vorderansicht einer Sprühdüse der erfindungsgemäßen Vorrichtung in einer bevorzugten Sprühstellung.

### Figurenbeschreibung

Die Figuren sind lediglich schematischer Natur und dienen ausschließlich dem Verständnis der Erfindung. Gleiche Elemente sind dabei mit denselben Bezugszeichen versehen.

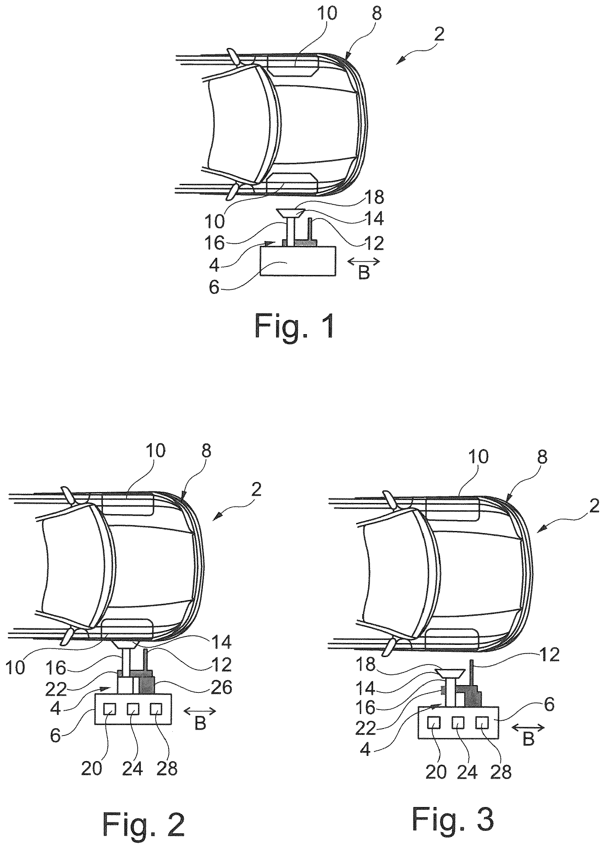

Fig. 1 zeigt eine erste Ausführungsform einer sich in einer Fahrzeugbehandlungsanlage 2 befindlichen erfindungsgemäßen Vorrichtung 4 in einer ersten Stellung. Die Vorrichtung 4 ist an einer in einer Behandlungsrichtung B hin und her verfahrbaren Portalsäule 6 vorgesehen. In der Fahrzeugbehandlungsanlage 2 befindet sich ein Fahrzeug 8. Die Vorrichtung 4 ist grundsätzlich dafür vorgesehen, eine Behandlungsflüssigkeit auf ein Rad 10 (Reifen und/oder Felge) des Fahrzeugs 8 aufzubringen.

Die Vorrichtung 4 weist eine Sprühdüse 12 und eine rotierend antreibbare Radbehandlungsbürste 14 auf. Mittels der Sprühdüse 12 kann eine Behandlungsflüssigkeit wie etwa eine Reinigungsflüssigkeit auf das Rad 10 aufgesprüht werden, so dass Verunreinigungen angelöst werden. Eine Reinigung/ ein Entfernen der Verunreinigungen kann dann mit der Radbehandlungsbürste 14 erfolgen.

Die Radbehandlungsbürste 14 ist an einer ersten Zustellvorrichtung 16, welche als ein aus- und einfahrbarer Arm ausgebildet ist, montiert. In Fig. 1 befindet sich die Radbehandlungsbürste 14 ist einer radfernen Bürstengrundstellung. In der radfernen Bürstengrundstellung ist die Radbehandlungsbürste 14 von dem Rad 10 seitlich beabstandet und liegt mit einer Bürstenfläche 18 nicht an dem Rad 10 an. Die Sprühdüse 12 befindet sich in Fig. 1 in einer radfernen Düsengrundstellung. In der radfernen Düsengrundstellung weist die Sprühdüse 12 einen zu großen, für einen Sprühauftrag ungeeigneten Abstand von dem Rad 10 des Fahrzeugs 8 auf. Die Sprühdüse 12 ist in der radfernen Düsengrundstellung in einem vordefinierten Abstand hinter der Bürstenfläche 18 der Radbehandlungsbürste 14 angeordnet.

Wie aus Fig. 2 ersichtlich wird, kann die Radbehandlungsbürste 14 mit Hilfe der ersten Zustellvorrichtung 16 ausgefahren werden, bis sie das Rad 10 erreicht. Dafür weist die Vorrichtung 4 einen ersten (pneumatischen oder hydraulischen oder elektrischen) Antrieb 20 auf. Dass die Radbehandlungsbürste 14 das Rad 10 erreicht hat, kann beispielsweise mittels eines Kraftbegrenzers/ einer Kraftbegrenzung oder einer Motorstromvermessung in an sich bekannter Weise bestimmt werden. In der in Fig. 2 gezeigten Stellung befindet sich die Radbehandlungsbürste 14 in einer Behandlungsstellung am Rad.

Beim Ausfahren der Radbehandlungsbürste 14 wird die Sprühdüse 12 über einen Mitnehmer 22 in einem vorbestimmten (unveränderlichen) Abstand zu der Radbehandlungsbürste 14 mitgenommen/mitgeschleppt. Der Mitnehmer 22 umgreift einen verschmälerten Abschnitt der ersten Zustellvorrichtung 16 und wird durch einen verbreiterten Abschnitt der ersten Zustellvorrichtung 16 in Richtung hin zu dem Rad 10 bewegt/gedrückt. Wenn die Radbehandlungsbürste 14 das Rad 10 erreicht, weist die Sprühdüse 12 ihre bevorzugte Sprühstellung auf, jedoch soll sie in der in Fig. 2 gezeigten Stellung noch keine Behandlungsflüssigkeit aussprühen, da die Radbehandlungsbürste 14 an dem Rad 10 anliegt.

Daher wird in einem nächsten Schritt die Radbehandlungsbürste 14 bzw. die erste Zustellvorrichtung 16 über einen zweiten (pneumatischen oder hydraulischen oder elektrischen) Antrieb 24 wieder eingefahren (zurück in die Bürstengrundstellung), so dass sich die in Fig. 3 gezeigte Stellung ergibt. Dabei sind die erste Zustellvorrichtung 16 bzw. die Radbehandlungsbürste 14 relativ zu der Sprühdüse 12 bewegbar (von der Sprühdüse 12 entkoppelt), so dass die Sprühdüse 12 in ihrer bevorzugten Sprühstellung verbleibt.

Nun kann ein Behandlungsflüssigkeitsauftrag auf das Rad 10 erfolgen. Dazu bewegt sich die Sprühdüse 12 (die Portalsäule 6) in der Behandlungsrichtung B. Nach dem Behandlungsflüssigkeitsauftrag wird die Sprühdüse 12 über eine zweite Zustellvorrichtung 26, welche wie die erste Zustellvorrichtung 16 als ein aus- und einfahrbarer Arm ausgebildet ist und an welcher die Sprühdüse 12 montiert ist, wieder in die Düsengrundstellung eingefahren. Dies geschieht mit Hilfe eines dritten (pneumatischen oder hydraulischen oder elektrischen) Antriebs 28. Sobald die Sprühdüse 12 wieder eingefahren ist, ergibt sich wieder die in Fig. 1 gezeigte Stellung der Vorrichtung 4.

Der erste Antrieb 20 führt in dieser Ausführungsform lediglich ein vollständiges Ausfahren durch, bis erkannt wird, dass sich die Radbehandlungsbürste 14 an dem Rad 10 des Fahrzeugs 8 befindet. Der zweite Antrieb 24 führt lediglich ein vollständiges Einfahren durch, bis die erste Zustellvorrichtung 16 beispielsweise gegen einen nicht gezeigten Anschlag fährt. Der dritte Antrieb 28 führt lediglich ein vollständiges Einfahren der zweiten Zustellvorrichtung 26 durch. Neben dem ersten Antrieb 20, dem zweiten Antrieb 24 und dem dritten Antrieb 28 ist kein weiterer Antrieb vonnöten.

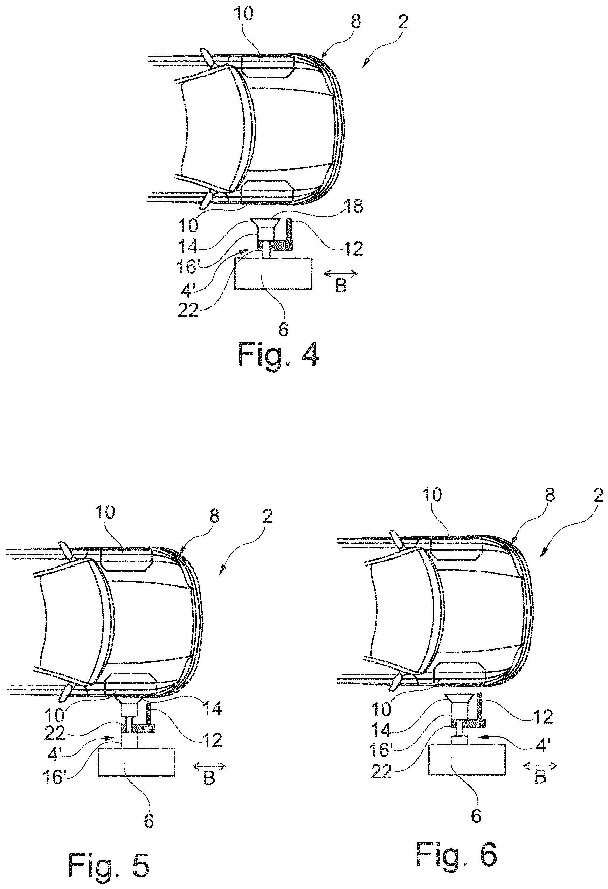

Fig. 4 zeigt eine zweite Ausführungsform einer sich in einer Fahrzeugbehandlungsanlage 2 befindlichen Vorrichtung 4' in einer ersten Stellung. Nachfolgend wird lediglich auf die Unterschiede der zweiten Ausführungsform zu der ersten Ausführungsform eingegangen. Ansonsten gilt die Beschreibung zur ersten Ausführungsform entsprechend für die zweite Ausführungsform.

In Fig. 4 befindet sich die Radbehandlungsbürste 14 in der radfernen Bürstengrundstellung und die Sprühdüse 12 befindet sich in der radfernen Düsengrundstellung. Die Sprühdüse 12 ist in der radfernen Düsengrundstellung etwa auf Höhe der Radbehandlungsbürste 14 angeordnet, kann jedoch auch näher an dem Rad 10 oder weiter entfernt von dem Rad 10 angeordnet sein.

Wie aus Fig. 5 ersichtlich wird, kann die Radbehandlungsbürste 14 mit Hilfe der ersten Zustellvorrichtung 16' ausgefahren werden, bis sie das Rad 10 erreicht. Dabei ist die Sprühdüse 12 zunächst von der ersten Zustellvorrichtung 16' entkoppelt (die erste Zustellvorrichtung 16' und die Radbehandlungsbürste 14 bewegen sich relativ zu der Sprühdüse), bis sie schließlich von dem Mitnehmer 22 mitgeschleppt/mitgenommen wird und mit der ersten Zustellvorrichtung 16' gekoppelt ist. Dies wird insbesondere dadurch realisiert, dass angrenzend an die Radbehandlungsbürste 14 die erste Zustellvorrichtung 16' zunächst einen verbreiterten Abschnitt, dann einen verschmälerten Abschnitt und schließlich wieder einen verbreiterten Abschnitt aufweist und der Mitnehmer 22 den verschmälerten Abschnitt umgreift. In Fig. 5 befindet sich die Radbehandlungsbürste 14 in der Behandlungsstellung am Rad und die Sprühdüse 12 befindet sich in ihrer bevorzugten Sprühstellung.

Ausgehend von der in Fig. 5 gezeigten Stellung wird die erste Zustellvorrichtung 16' um einen vorbestimmten Weg, entkoppelt von der Sprühdüse zurückgefahren, so dass die Stellung der Sprühdüse 12 in Fig. 6 unverändert zu der Stellung der Sprühdüse 12 in Fig. 5 ist. In der in Fig. 6 gezeigten Stellung erfolgt der Behandlungsflüssigkeitsauftrag auf das Rad 10. Fährt die erste Zustellvorrichtung 16' von der in Fig. 6 gezeigten Stellung wieder in die in Fig. 4 gezeigte Stellung, ist die Sprühdüse 12 wieder mit der ersten Zustellvorrichtung 16' gekoppelt und fährt zurück in die Düsengrundstellung.

In der zweiten Ausführungsform ist somit die Sprühdüse 12 mittels der ersten Zustellvorrichtung 16' in die radferne Düsengrundstellung verbringbar. Es ist keine zweite Zustellvorrichtung vonnöten. Die Antriebssteuerung der zweiten Ausführungsform ist dafür etwas komplexer als die der ersten Ausführungsform, da im Gegensatz zu der ersten Ausführungsform nicht nur ein vollständiges Aus-/ Einfahren vorgesehen ist, sondern zwischen der in Fig. 5 gezeigten Stellung und der in Fig. 6 gezeigten Stellung ein Einfahren um einen vorbestimmten Weg durchgeführt wird. Dafür ist in der zweiten Ausführungsform jedoch keine Wegmesseinrichtung vonnöten. Dass die in Fig. 6 gezeigte Stellung erreicht ist, kann beispielsweise mittels eines Kontaktsensors oder Widerstandssensors bestimmt werden.

Die Portalsäule 6 sowie die erfindungsgemäße Vorrichtung 4, 4' sind in den Figuren jeweils nur an der rechten Seite des Fahrzeugs 8 dargestellt, jedoch versteht es sich von selbst dass auch auf der linken Seite des Fahrzeugs 8 eine Portalsäule 6 sowie eine erfindungsgemäße Vorrichtung 4, 4' vorgesehen sind.

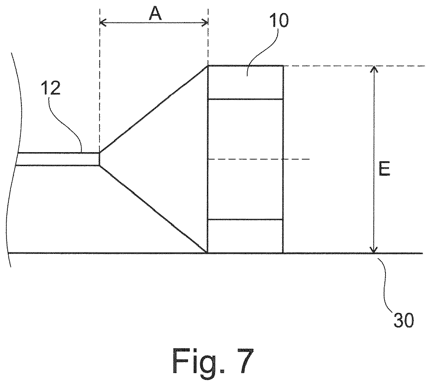

Die Sprühdüse 12 stellt wie in Fig. 7 dargestellt einen aufgeweiteten Sprühstrahl wie einen Flachstrahl oder einen Fächerstrahl bereit. In der bevorzugten Sprühstellung ist die Sprühdüse in einem auf ihre Sprüheigenschaften abgestimmten, optimalen Sprühabstand A von dem Rad 10 angeordnet. In der bevorzugten Sprühstellung ist die Sprühdüse 12 gerade so weit von dem Rad 10 beabstandet, dass der von ihr abgegebene Sprühstrahl, wenn er auf das Rad des Fahrzeugs trifft, in einer Richtung senkrecht zu dem Boden 30 der Fahrzeugbehandlungsanlage 2 eine Erstreckung E aufweist, welche etwa dem Durchmesser des Rads 10/ der Felge des Rads 10 entspricht.

### Bezugszeichenliste

- 2: Fahrzeugbehandlungsanlage
- 4, 4': Vorrichtung
- 6: Portalsäule
- 8: Fahrzeug
- 10: Rad
- 12: Sprühdüse
- 14: Radbehandlungsbürste
- 16, 16': erste Zustellvorrichtung
- 18: Bürstenfläche
- 20: erster Antrieb
- 22: Mitnehmer
- 24: zweiter Antrieb
- 26: zweite Zustellvorrichtung
- 28: dritter Antrieb
- 30: Boden

## Patentansprüche

1. Vorrichtung (4, 4') zum Aufbringen einer Behandlungsflüssigkeit auf ein Rad (10) eines Fahrzeugs (8) in einer Fahrzeugbehandlungsanlage (2) mit:
einer Sprühdüse (12), mittels welcher die Behandlungsflüssigkeit auf das Rad (10) aufgesprüht werden kann; und
einer Radbehandlungsbürste (14), welche einer Behandlung des Rads (10) dient und welche mittels einer ersten Zustellvorrichtung (16, 16') zwischen einer radfernen Bürstengrundstellung und einer Behandlungsstellung am Rad bewegbar ist;
**dadurch gekennzeichnet, dass**
die erste Zustellvorrichtung (16, 16') eingerichtet ist, beim Verbringen der Radbehandlungsbürste (14) von der radfernen Bürstengrundstellung in die Behandlungsstellung am Rad die Sprühdüse (12) von einer radfernen Düsengrundstellung in eine bevorzugte Sprühstellung zu bewegen, und beim Verbringen der Radbehandlungsbürste (14) weg von der Behandlungsstellung am Rad, insbesondere hin zu der radfernen Bürstengrundstellung, die Sprühdüse (12) in der bevorzugten Sprühstellung zu belassen.

2. Vorrichtung (4, 4') nach Anspruch 1, **dadurch gekennzeichnet, dass** die Sprühdüse (12) beim Verbringen der Radbehandlungsbürste (14) von der radfernen Bürstengrundstellung in die Behandlungsstellung am Rad mit der ersten Zustellvorrichtung (16, 16') zumindest abschnittsweise gekoppelt ist und beim Verbringen der Radbehandlungsbürste (14) weg von der Behandlungsstellung am Rad, insbesondere hin zu der radfernen Bürstengrundstellung, von der ersten Zustellvorrichtung (16, 16') zumindest abschnittsweise, insbesondere über eine vorbestimmte Wegstrecke, entkoppelt ist.

3. Vorrichtung (4) nach Anspruch 1 oder 2, ferner **gekennzeichnet durch** eine zweite Zustellvorrichtung (26), an welcher die Sprühdüse (12) angebracht oder montiert ist, und mittels welcher die Sprühdüse (12) von der bevorzugten Sprühstellung in die radferne Düsengrundstellung verbringbar ist.

4. Vorrichtung (4) nach Anspruch 3, **dadurch gekennzeichnet, dass** diese eingerichtet ist zum
Ausfahren der Radbehandlungsbürste (14) von der radfernen Bürstengrundstellung in die Behandlungsstellung am Rad mittels der ersten Zustellvorrichtung (16) und dadurch bewirktes Verbringen der Sprühdüse (12) von der radfernen Düsengrundstellung in die bevorzugte Sprühstellung;
Einfahren der Radbehandlungsbürste (14) mittels der ersten Zustellvorrichtung (16) von der Behandlungsstellung am Rad in die radferne Bürstengrundstellung und gleichzeitiges Verbleiben der Sprühdüse (12) in der bevorzugten Sprühstellung;
Aufsprühen von Behandlungsflüssigkeit mit der Sprühdüse (12) auf das Rad (10) und Bewegen der Sprühdüse (12) in einer Behandlungsrichtung (B) entlang des Rads (10); und
Einfahren der Sprühdüse (12) mittels der zweiten Zustellvorrichtung (26) von der bevorzugten Sprühstellung in die radferne Düsengrundstellung.

5. Vorrichtung (4) nach Anspruch 3 oder 4, **dadurch gekennzeichnet, dass** die erste Zustellvorrichtung (16) einen ersten, vorzugsweise pneumatischen, Antrieb (20) zum Ausfahren der Radbehandlungsbürste (14) von der radfernen Bürstengrundstellung hin zu der Behandlungsstellung am Rad und einen zweiten, vorzugsweise pneumatischen, Antrieb (24) zum Einfahren der Radbehandlungsbürste (14) von der Behandlungsstellung am Rad hin zu der radfernen Bürstengrundstellung aufweist und die zweite Zustellvorrichtung (26) nur einen einzigen, vorzugsweise pneumatischen, Antrieb (28) zum Einfahren der Sprühdüse (12) von der bevorzugten Sprühstellung in die radferne Düsengrundstellung aufweist.

6. Vorrichtung (4') nach Anspruch 1 oder 2, **dadurch gekennzeichnet, dass** die Sprühdüse (12) mittels der ersten Zustellvorrichtung (16') in die radferne Düsengrundstellung verbringbar ist.

7. Vorrichtung (4, 4') nach einem der vorhergehenden Ansprüche, **dadurch gekennzeichnet, dass**, wenn die erste Zustellvorrichtung (16, 16') die Radbehandlungsbürste (14) von der radfernen Bürstengrundstellung in die Behandlungsstellung am Rad verbringt, die Sprühdüse (12) über einen Mitnehmer (22) mit der ersten Zustellvorrichtung (16, 16') derart gekoppelt ist, dass die erste Zustellvorrichtung (16, 16') die Sprühdüse (12) mitnimmt und/oder mitschleppt, und dass, wenn die erste Zustellvorrichtung (16, 16') die Radbehandlungsbürste (14) von der Behandlungsstellung am Rad in die radferne Bürstengrundstellung verbringt, die Sprühdüse (12) und der Mitnehmer (22) von der ersten Zustellvorrichtung (16, 16') derart entkoppelt sind, dass die erste Zustellvorrichtung (16, 16') relativ zu der Sprühdüse (12) und dem Mitnehmer (22) bewegbar ist und die Sprühdüse (12) in der bevorzugten Sprühstellung verbleibt.

8. Vorrichtung (4, 4') nach einem der vorhergehenden Ansprüche, **dadurch gekennzeichnet, dass** die Sprühdüse (12) und die Radbehandlungsbürste (14) derart zueinander angeordnet, insbesondere zueinander beabstandet oder versetzt, sind, dass, wenn die Radbehandlungsbürste die Behandlungsstellung am Rad erreicht, die Sprühdüse (12) sich in der bevorzugten Sprühstellung befindet, wobei die Sprühdüse (12) dann einen optimierten, an ihre Sprüheigenschaften angepassten, Sprühabstand (A) von dem Rad (10) einnimmt.

9. Fahrzeugbehandlungsanlage (2) mit zumindest einer gegenüber einem zu behandelnden Fahrzeug (8) in eine Behandlungsrichtung hin und her verfahrbaren Portalsäule (6), an welcher eine Vorrichtung (4, 4') nach einem der Ansprüche 1 bis 8 vorgesehen ist.

10. Verfahren zum Aufbringen einer Behandlungsflüssigkeit auf ein Rad (10) eines Fahrzeugs (8) in einer Fahrzeugbehandlungsanlage (2), insbesondere mit Hilfe einer Vorrichtung (4, 4') nach einem der Ansprüche 1 bis 8, **gekennzeichnet durch** die Schritte:
Ausfahren einer Radbehandlungsbürste (14) von einer radfernen Bürstengrundstellung hin zu einer Behandlungsstellung am Rad mittels einer ersten Zustellvorrichtung (16, 16') und **dadurch** bewirktes Verbringen einer Sprühdüse (12) von einer radfernen Düsengrundstellung in eine bevorzugte Sprühstellung; und
Einfahren der Radbehandlungsbürste (14) mittels der ersten Zustellvorrichtung (16, 16') weg von der Behandlungsstellung am Rad, insbesondere hin zu der radfernen Bürstengrundstellung, und gleichzeitiges Verbleiben der Sprühdüse (12) in der bevorzugten Sprühstellung;
vorzugsweise ferner mit den Schritten:
Aufsprühen von Behandlungsflüssigkeit mit der Sprühdüse (12) auf das Rad (10) und Bewegen der Sprühdüse (12) in einer Behandlungsrichtung (B) entlang des Rads (10); und
Einfahren der Sprühdüse (12) mittels einer zweiten Zustellvorrichtung (26), an welcher die Sprühdüse (12) angebracht ist, von der bevorzugten Sprühstellung in die radferne Düsengrundstellung.
